# FASCICULE DE BREVET EUROPEEN

(11) **EP 1 299 766 B1**
(45) Date de publication et mention de la délivrance du brevet: **07.05.2008**
(21) Numéro de dépôt: 01954065.7
(22) Date de dépôt: 10.07.2001
(51) Int. Cl.: G02F 1/017

(54) **STRUCTURE D'ABSORBANT SATURABLE POUR COMPOSANT OPTIQUE DE REGENERATION DE SIGNAL OPTIQUE**
SÄTTIGBARE ABSORBERSTRUKTUR EINES OPTISCHEN BAUTEILES ZUR REGENERIERUNG EINES OPTISCHEN SIGNALS
SATURABLE ABSORBENT STRUCTURE, IN PARTICULAR FOR REGENERATING OPTICAL COMPONENT AND METHOD FOR MAKING SAME

(30) Priorité: 11.07.2000 FR 0009030
(43) Date de publication de la demande: 09.04.2003
(73) Titulaire: Fahrenheit Thermoscope LLC, Las Vegas, NV 89119 (US)
(72) Inventeur: MARCEAUX, Alexandre, F-78370 Plaisir (FR); LOUALICHE, Slimane, F-35510 Cesson Sevigne (FR); LE CORRE, Alain, F-35510 Cesson Sevigne (FR); DEHAESE, Olivier, F-35200 Rennes (FR)
(74) Mandataire: Callon de Lamarck, Jean-Robert
(86) Numéro de dépôt international: PCT/FR2001/002219
(87) Numéro de publication internationale: WO 2002/005016

(56) Documents cités:
- EP-A- 0 736 791
- JP-A- 5 013 814
- US-A- 5 049 816
- US-A- 5 291 507
- US-A- 5 689 357
- DELPON LUGAGNE E ET AL: "ULTRAFAST EXCITONIC SATURABLE ABSORPTION IN ION-IMPLANTED INGAAS/ INALAS MULTIPLE QUANTUM WELLS" APPLIED PHYSICS LETTERS,US,AMERICAN INSTITUTE OF PHYSICS. NEW YORK, vol. 72, no. 7, 16 février 1998 (1998-02-16), pages 759-761, XP000742757 ISSN: 0003-6951 cité dans la demande
- R. Takahashi et al., Appl. Phys. Letters, vol 65, p. 1790-1792
- B. Srocka et al., Phys. Rev. B, vol 49, p. 10259-10268
- D. Söderström et al., Appl. Phys. Lett., vol 70, p. 3374-3376

## Description

### DOMAINE TECHNIQUE GENERAL

La présente invention est relative à une structure d'absorbant saturable, notamment pour composant de régénération de signal optique.

Elle propose également un procédé pour réaliser une telle structure.

L'invention trouve en particulier avantageusement application dans les réseaux de communication à fibre optique à très haut débit (≥2.5 Gbit/s).

La transmission par fibre optique offre de nombreux avantages notamment en termes de coûts, de capacité de liaison, de qualité de liaison, ainsi qu'en termes de flexibilité conférée au réseau.

Notamment, l'introduction de la fibre optique dans le réseau interurbain est désormais une réalité concrète, de même que la multiplication de liaisons sous-marines intercontinentales.

Toutefois, les communications à très haut débit sont encore limitées par certaines difficultés techniques (modulateurs à très haut débit, propagation avec compensation de dispersion, propagation soliton, etc.). Les technologies qui permettent d'accéder à de très hauts débits restent encore à fiabiliser avant de pouvoir être introduites dans le réseau

L'apparition de réseaux multiplexés en longueur d'onde a permis de faire beaucoup de progrès dans le domaine de l'augmentation du débit tout en conservant les structures installées.

Un autre facteur qu'il a fallu maîtriser pour conserver la transparence optique est l'amplification optique en ligne rendue possible grâce à l'amplificateur optique à fibre dopée à l'erbium, fiable, de grande bande passante et compatible avec le réseau installé.

Cependant, les communications par fibres optiques hauts débits restent encore limitées par la fonction de régénération du signal.

La qualité de la liaison dépend en effet beaucoup de la qualité des signaux qui s'y propagent. La bonne utilisation de la ligne entraîne une multiplication des opérations optiques le long de la liaison et aux différents noeuds du réseau. Pour accroître la flexibilité des réseaux, on prévoit d'ajouter un très grand nombre d'opérations telles que des opérations de surveillance, d'insertion-extraction de signal ou d'amplification. Chaque opération introduit une dégradation détruisant peu à peu la qualité de la liaison.

C'est pourquoi on prévoie classiquement de répartir dans la ligne de transmission des composants optiques de régénération qui permettent de remettre en forme les signaux et de restaurer leur qualité pour qu'elle s'approche au mieux de l'original.

Peu de solutions ont à ce jour été proposées pour permettre la régénération en ligne du signal tout en respectant la transparence optique au débit et à la longueur d'onde.

### PRESENTATION DE L'ETAT DE LA TECHNIQUE

Une technique étudiée actuellement par plusieurs laboratoires repose sur les non-linéarités résonantes dans les semi-conducteurs et est liée à l'utilisation de l'absorption saturée dans les structures à multi-puits quantiques. Plus précisément, cette technique utilise notamment les non-linéarités optiques au voisinage du pic excitonique dans les puits quantiques.

On pourra par exemple à cet égard se référer aux différentes publications suivantes :
- R. Takahashi, Y. Kawamura, T. Kagawa, H. Dwamura, Appl. Phys. Lett. 65, p. 1790, 1994 ;
- E. Lugagne Delpon, J.L. Oudar, N. Bouche, R. Raj. S. Shen, N. Stelmakh, J.M. Lourtioz, Appl. Phys. Lett. 72, p. 759, 1998 ;
- H. Hirano, H. Kobayashi, H. Tsuda, R. Takahashi, M. Asobe, K. Suto, K. Hagimoko, Electronics Letters 34, p. 198, 1998 ;
- J. Mangeney, J.L. Oudar, J.C. Harmand, C. Meriadec, G. Patriarche, G. Aubin, N. Stelmakh, J.M. Lourtioz, Appl. Phys. Lett. 76, p. 1371, 2000.

L'avantage de ce type de composant est qu'il est «passif», c'est-à-dire qu'il ne nécessite pas d'alimentation électrique, ce qui accroît sa simplicité et sa fiabilité. De plus il permet de séparer la fonction « régénération » de la fonction « amplification », et d'optimiser séparément ces deux fonctions.

Pour améliorer l'efficacité quantique de cette structure, la zone active en multi-puits quantiques est disposée à l'intérieur d'une cavité verticale à miroirs de Bragg intégrés. Les puissances de commande arrivent de ce fait à être compatibles avec les puissances délivrées par les lasers à semi-conducteurs.

Cependant, il reste un problème important à résoudre : celui de la réponse temporelle. En effet, le temps de montée du phénomène non-linéaire est très court (<1ps), tandis que le temps de retour à l'équilibre est relativement lent (de l'ordre de 1ns).

Ainsi, les techniques de régénération utilisant les non-linéarités optiques dans les multi-puits quantiques au voisinage du pic excitonique se heurtent au problème de la rapidité de réponse du composant optique. L'absorption excitonique est quasi-instantanée et son blanchiment par les excitons est très court (temps de montée voisin de 1ps), alors que le retour à l'équilibre est dominé par la durée de vie des porteurs qui est voisine de quelques nanosecondes dans les matériaux étudiés.

L'amélioration du temps de retour à l'équilibre équivaut à la maîtrise du contrôle de la durée de vie des porteurs photocréés dans la structure.

Deux techniques sont déjà connues pour abaisser la durée de vie des porteurs jusqu'à des valeurs compatibles avec le traitement de signaux optiques rapides. Ces deux techniques sont :
- la croissance de matériaux contenant une grande quantité de défauts ;
- la création d'une grande quantité de défauts par une méthode d'implantation ionique

Dans un exemple de mise en oeuvre de la première de ces techniques, on effectue une opération de croissance à basse température (environ 200°) suivie d'un dopage en Béryllium et d'un recuit à 500°C. Cette opération donne naissance à un matériau dans lequel les porteurs ont une durée de vie très faible étant donné la présence d'Antisite AsGa et de complexes Be-As qui jouent le rôle de centre de recombinaison. Grâce à cette technique, on atteint des temps de retour à l'équilibre de 4 ps.

Une structure incluse dans une cavité optique et obtenue de cette façon a permis de réaliser un régénérateur optique fonctionnant à 10 Gbit/s.

Néanmoins, cette technologie présente deux inconvénients majeures :
- elle est complexe à mettre en oeuvre (croissance basse température, dopage Be jusqu'à 4.1017/cm3 et recuit à 500°C)
- elle se traduit également par une tendance à l'affaiblissement du pic excitonique préjudiciable au fonctionnement du composant observé expérimentalement après la croissance et le dopage au Béryllium.

La seconde technique connue consiste à utiliser un bombardement ionique à haute énergie pour créer des défauts. Les ions accélérés perdent leur énergie par freinage électrostatique dans la majeure partie du parcours, ainsi que par choc sur les atomes du réseau dans la zone d'arrêt entraînant une grande production de défauts dans cette zone. Cette technique ancienne de création de défauts a été utilisée sur les multi-puits quantiques AlInAs/GaInAs irradiés aux ions lourds de Ni+ accélérés à 12 MeV. Pour des doses d'irradiation variant de 5.1010 à 1012 par cm2, les durées de vie vont de 50 ps à 1.6 ps.

Avec cette technique, on obtient des défauts sur toute la trajectoire des ions et ces défauts ont des niveaux répartis dans toute la bande interdite du matériau actif. La présence de ces défauts augmente notablement l'absorption même dans le matériau de largeur de bande d'énergie interdite élevée tel que l'InP.

On remarque toutefois que le contraste d'absorption au voisinage du pic excitonique est très atténué à cause de cette absorption supplémentaire, ce contraste diminuant lorsque la dose d'irradiation augmente.

De plus ces défauts d'irradiations sont connus comme instables ; la stabilité à long terme des propriétés de la structure reste à démontrer.

Enfin, le traitement est très lourd car il nécessite le passage du composant optique de la chambre d'épitaxie vers un accélérateur d'ions lourds qui est une installation volumineuse, complexe et d'un coût élevé.

### PRESENTATION DE L'INVENTION

La présente invention propose quant à elle une structure d'absorbant saturable à multipuits quantiques à centres de recombinaison qui présente des temps de retour à l'équilibre très courts et qui permet par conséquent une régénération des signaux optiques dans des temps compatibles avec le traitement de signaux optiques rapides (>10Gbit/s).

La structure proposée est d'une grande efficacité d'absorption.

Elle présente en outre une très bonne stabilité à long terme.

On notera à cet égard que dans le cas des structures obtenues avec les techniques antérieures telles qu'exposées ci-dessus, les centres de recombinaison ont des niveaux d'énergie répartis dans toute la bande interdite de la structure à multi-puits quantiques, ce qui entraîne l'apparition d'absorptions parasites.

Plus particulièrement, la structure proposée par l'invention est une structure d'absorbant saturable comportant : un empilement de couches en matériau(x) III-V constitué d'une série d'alternances de puits et de barrières quantiques ; une pluralité de centres de recombinaison qui sont répartis dans ledit empilement, caractérisé en ce que les centres de recombinaison sont des atomes de fer qui définissent un seul niveau d'énergie de recombinaison discret, localisé sensiblement au milieu de la bande interdite des puits de l'empilement.

La structure proposée - dans laquelle le niveau d'énergie de recombinaison est discret - permet quant à elle d'éviter ces absorptions parasites.

Les structures pour lesquelles il existe un seul niveau d'énergie de recombinaison discret dans la bande interdite, présentent une plus grande efficacité d'absorption.

Par ailleurs, les centres de recombinaison sont des atomes de fer qui définissent un seul niveau d'énergie de recombinaison discret localisé sensiblement au milieu de la bande interdite, c'est à dire à l'endroit où l'efficacité de piégeage des porteurs est optimale, de tels centres de recombinaison agissant alors efficacement sur les deux types de porteurs photocréés, les électrons et les trous.

En outre l'empilement peut comporter une succession d'In_{0.53}Ga_{0.47}As/InP.

D'autres matériaux sont toutefois envisageables pour les couches de l'empilement.

Par ailleurs, l'invention propose un procédé pour la réalisation d'une telle structure, qui est d'une bien plus grande simplicité que les procédés de réalisation exposés ci-dessus.

Selon ce procédé, on fait croître les couches de l'empilement par épitaxie et les centres de recombinaison sont introduits par dopage durant la croissance épitaxiale desdites couches de l'empilement.

Comme on l'aura compris, avec un tel procédé, les centres de recombinaison sont introduits dans la structure durant la croissance de celle-ci, en une seule opération technique.

En outre, un tel procédé présente l'avantage de permettre un contrôle de la localisation spatiale et de la concentration du dopage d'une grande précision.

L'invention concerne en outre un composant optique, et notamment un composant de régénération de signal optique, qui comporte une structure d'absorbant saturable du type précité.

Elle propose également un système de transmission par fibre optique comportant une ligne de transmission et des moyens pour l'émission et la réception d'un signal optique transmis par ladite ligne, caractérisé en ce qu'il comporte dans la ligne de transmission au moins un composant de régénération du type précité.

### PRESENTATION DES FIGURES

D'autres caractéristiques et avantages de l'invention ressortiront encore de la description qui suit laquelle est purement illustrative et non limitative et doit être lue en regard des dessins annexés sur lesquels :
- la figure 1 est un graphe sur lequel on a porté les courbes de taux de transmission normalisée en fonction du taux de retour à l'équilibre dans le cas d'une structure dopée conforme à un mode de réalisation possible de l'invention et dans le cas d'une structure non dopée ;
- la figure 2 est un graphe sur lequel on a porté les variations de contraste en fonction de la densité des porteurs de pompe dans le cas d'une structure dopée conforme à un mode de réalisation possible de l'invention et dans le cas d'une structure non dopée ;
- la figure 3 est un graphe sur lequel on a porté le temps de retour à l'équilibre en fonction de la concentration en dopant ;
- la figure 4 est un graphe sur lequel on a porté les variations de contraste en fonction de la densité des porteurs générés par la pompe pour différentes valeurs de concentration de dopage.

### DESCRIPTION D'UN OU PLUSIEURS EXEMPLES DE REALISATIONS ET DE MISE EN OEUVRE

Un exemple de structure à absorbant saturable conforme à un mode de réalisation possible de l'invention est une structure comportant un empilement de 50 multi-puits quantiques d'In_{0.53}Ga_{0.47}As/InP dont le pic d'absorption excitonique est situé à 1.57µm environ.

A titre d'exemple, les couches d'InGaAs sont de 8 nm, tandis que les couches d'InP sont de 10 nm.

Un dopage Fer (Fe) - qui définit des centres de recombinaison dans la structure - est introduit dans les différentes couches de cet empilement durant la croissance épitaxiale de celle-ci.

On notera que le fait d'introduire les centres de recombinaison par dopage durant la croissance permet de contrôler avec précision la localisation spatiale de ces centres de piégeage et de les positionner uniquement dans les zones nécessaires à l'exclusion de toute autre région.

En outre, la concentration de piégeages est contrôlée et peut être ajustée pour obtenir une valeur de durée de vie de porteurs strictement nécessaire au composant visé.

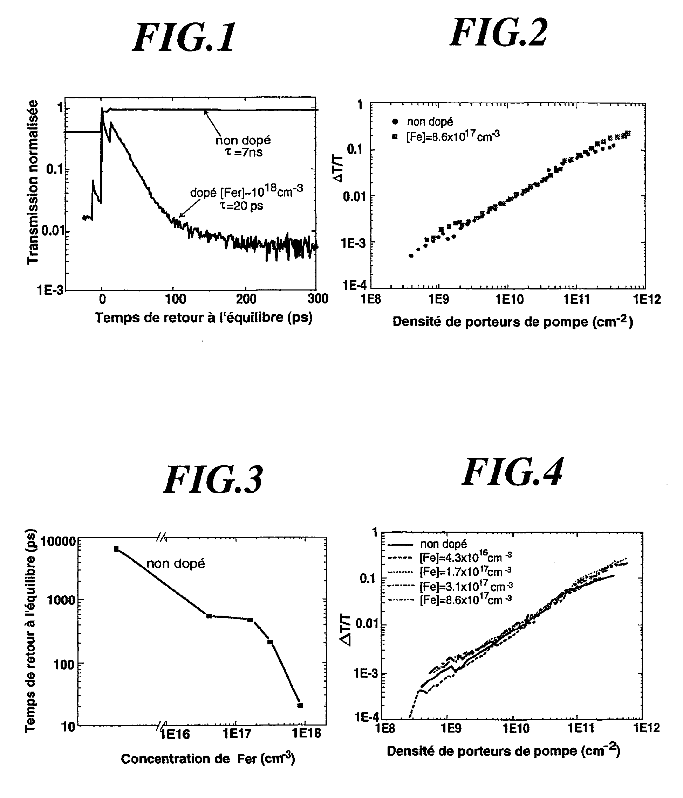

L'influence du dopage en Fer sur les propriétés de retour à l'équilibre de la saturation d'absorption dans une structure du type précitée a été étudiée. Les résultats obtenus par les inventeurs sont présentés sur les figures 1 à 4.

La figure 1 présente des mesures de temps de retour à l'équilibre effectuées sur deux échantillons à l'aide d'une expérience pompe-sonde.

Le premier est l'échantillon de référence, il n'est pas dopé en Fer. On constate que le temps de retour à l'équilibre de la saturation d'absorption vaut environ 7 ns.

Le second échantillon est fortement dopé, il présente une concentration en Fer voisine de 10¹⁸ cm⁻³ Sa constante de temps de retour à l'équilibre chute jusqu'à 20 ps.

La figure 2 représente la variation de contraste de transmission en fonction du nombre de porteurs photocréés dans ces deux mêmes échantillons. Le nombres de porteurs créés est directement lié à l'intensité lumineuse dans la structure. Le contraste de transmission ΔT/T est le rapport entre la différence de transmission ΔT entre le coefficient de transmission optique de la structure soumise à une forte intensité et le coefficient de transmission optique de la structure à faible intensité lumineuse et T le coefficient de transmission mesuré.

On constate que pour l'échantillon fortement dopé, le contraste de transmission demeure égal à celui de l'échantillon de référence. Le procédé permet donc de diminuer le temps de retour à l'équilibre de la structure tout en lui conservant ses propriétés.

Trois échantillons supplémentaires dopés en Fer ont été étudiés et comparés avec la référence non-dopée en Fer.

Ces échantillons ont été dopés durant leur croissance suivant le procédé de l'invention. Leur concentration a été estimée par une technique de hall qui permet de mesurer le nombre de porteurs libres. Ce nombre total de porteurs dans la structure correspond à la différence entre la concentration de dopant et celle des centres de piégeage représentés ici par le Fer. Les valeurs des concentrations en Fer obtenues par ce moyen varient de 10¹⁶ cm⁻³ pour l'échantillons le moins dopé à pour le plus dopé.

La figure 3 présente des mesures de temps de retour à l'équilibre effectuées sur ces échantillons à l'aide d'une pompe-sonde. L'examen de la courbe permet de mettre en évidence l'effet du dopage en Fer sur le temps de retour à l'équilibre. La valeur de ce temps varie de 7 ns pour l'échantillon de référence à 20 ps pour l'échantillon le plus dopé. Le contrôle de la concentration en Fer permet de contrôler le temps de retour à l'équilibre de la structure.

La figure 4 représente la variation de contraste de transmission en fonction du nombre de porteurs photocréés dans ces mêmes échantillons. Pour mettre en évidence l'influence du dopage en Fer sur ce contraste de transmission, les courbes obtenues pour les différentes concentrations de dopant sont représentées sur le même graphique. On constate que le contraste reste indépendant de la concentration et ceci pour toutes les valeurs des intensités lumineuses explorées. Le procédé proposé permet donc de contrôler le temps de retour à l'équilibre de la structure tout en lui conservant son efficacité comme l'attestent les différentes mesures du contraste de transmission optique.

## Revendications

1. Structure d'absorbant saturable comportant
- un empilement de couches en matériau(x) III-V constitué d'une série d'alternances de puits et de barrières quantiques
- une pluralité de centres de recombinaison répartis dans ledit empilement,
**caractérisée en ce que** les centres de recombinaison sont des atomes de fer qui définissent un seul niveau d'énergie de recombinaison discret, localisé sensiblement au milieu de la bande interdite des puits de l'empilement.

2. Structure selon la revendication 1, **caractérisée en ce que** les centres de recombinaison sont répartis avec une concentration comprise entre 10¹⁶ cm⁻³ et 10¹⁸ cm⁻³.

3. Structure d'absorbant saturable selon la revendication 1, **caractérisée en ce que** l'empilement comporte une succession d'In_{0.53}Ga_{0.47}As/InP.

4. Procédé d'obtention d'une structure absorbant saturable à multipuits quantiques selon l'une des revendications précédentes, **caractérisé en ce qu'**on fait croître les couches de l'empilement par épitaxie et **en ce que** les centres de recombinaison sont introduits par dopage durant la croissance épitaxiale desdites couches de l'empilement.

5. Composant optique **caractérisé en ce qu'**il comporte une structure d'absorbant saturable selon l'une des revendications 1 à 3.

6. Composant optique de régénération de signal optique, **caractérisé en ce qu'**il est constitué par un composant selon la revendication 5.

7. Système de transmission par fibre optique comportant une ligne de transmission et des moyens pour l'émission et la réception d'un signal optique transmis par ladite ligne, **caractérisé en ce qu'**il comporte dans la ligne de transmission au moins un composant optique de régénération selon la revendication 6.

## Claims

1. Saturable absorbent structure comprising:
- a multilayer stack made of III-V material(s) consisting of an alternating series of quantum wells and quantum barriers; and
- a plurality of recombination centres distributed within said stack,
**characterized in that** the recombination centres are iron atoms that define a single discrete recombination energy level localised substantially in the middle of the bandgap of the wells of the stack.

2. Structure according to Claim 1, **characterized in that** the recombination centres are distributed with a concentration of between 10¹⁶ cm⁻³ and 10¹⁸ cm⁻³.

3. Saturable adsorbent structure according to Claim 1, **characterized in that** the stack comprises an In_{0.53}Ga_{0.47}As/InP succession.

4. Process for obtaining a saturable adsorbent multiple-quantum-well structure according to one of the preceding claims, **characterized in that** the layers of the stack are grown epitaxially and **in that** the recombination centres are introduced by doping during the epitaxial growth of said layers of the stack.

5. Optical component, **characterized in that** it has a saturable adsorbent structure according to one of Claims 1 to 3.

6. Optical component for regenerating an optical signal, **characterized in that** it consists of a component according to Claim 5.

7. Fibre-optic transmission system, comprising a transmission line and means for transmitting and receiving an optical signal transmitted by said line, **characterized in that** it includes, in the transmission line, at least one optical regeneration component according to Claim 6.

## Patentansprüche

1. Sättigbare Absorptionsstruktur, die folgendes umfasst:
- einen Stapel von Schichten aus einem oder mehreren III-V Materialien, der aus einer Reihe aufeinanderfolgender quantenmechanischer Töpfe und Barrieren gebildet ist,
- mehrere Rekombinationszentren, die in dem Stapel verteilt sind,
**dadurch gekennzeichnet, dass** die Rekombinationszentren Eisenatome sind, die ein einziges diskretes Rekombinations-Energieniveau definieren, das im wesentlichen in der Mitte des verbotenen Bands der Töpfe des Stapels liegt.

2. Struktur nach Anspruch 1, **dadurch gekennzeichnet, dass** die Rekombinationszentren mit einer Konzentration verteilt sind, die zwischen 10¹⁶ cm⁻³ und 10¹⁸ cm⁻³ liegt.

3. Sättigbare Absorptionsstruktur nach Anspruch 1, **dadurch gekennzeichnet, dass** der Stapel eine Abfolge von In_{0,53}Ga_{0,47}As/InP umfasst.

4. Verfahren zum Erhalten einer sättigbaren Absorptionsstruktur mit mehreren quantenmechanischen Töpfen gemäß einem der vorhergehenden Ansprüche, **dadurch gekennzeichnet, dass** man die Schichten des Stapels mittels Epitaxie wachsen lässt und dadurch, dass die Rekombinationszentren während des epitaxialen Wachstums der Schichten des Stapels durch Dotierung eingebracht werden.

5. Optisches Bauteil, **dadurch gekennzeichnet, dass** es eine sättigbare Absorptionsstruktur gemäß einem der Ansprüche 1 bis 3 umfasst.

6. Optisches Bauteil zur Regeneration eines optischen Signals, **dadurch gekennzeichnet, dass** es durch ein Bauteil nach Anspruch 5 gebildet wird.

7. System zur Übertragung durch optische Fasern, das eine Übertragungsleitung und Mittel zum Senden und Empfangen eines über die Leitung übertragenen optischen Signals umfasst, **dadurch gekennzeichnet, dass** es in der Übertragungsleitung wenigstens ein optisches Bauteil zur Regeneration gemäß Anspruch 6 umfasst.
